# DEMANDE DE BREVET EUROPEEN

(11) **EP 1 457 695 A1**
(43) Date de publication de la demande: **15.09.2004**
(21) Numéro de dépôt: 04290566.1
(22) Date de dépôt: 02.03.2004
(51) Int. Cl.: F16C 35/067, F16B 21/18

(54) **Roulement immobilisé dans un logement au moyen d'un anneau de retenue élastique deplacable reversiblement**

(30) Priorité: 10.03.2003 FR 0302929
(71) Demandeur: SNR ROULEMENTS, F-74010 Annecy Cedex (FR)
(72) Inventeur: Nectoux, Didier, 74490 Annecy le Vieux (FR)
(74) Mandataire: Geismar, Thierry

(57) **Abrégé**

L'invention concerne un ensemble comprenant un roulement (1) et un logement (2) dans lequel le roulement (1) est immobilisé par emmanchement d'une bague (1a, 1b) du roulement (1) et au moyen d'un organe de retenue axiale (11) suivant une direction. Le logement (2) comprend une gorge (12) dans laquelle l'organe de retenue axiale (11) est disposé de façon déplaçable réversiblement entre une position active dans laquelle au moins une partie dudit organe est saillant par rapport à la surface d'emmanchement du logement (2) de sorte à venir en butée sur une face latérale de la bague emmanchée (1a, 1b), et une position inactive dans laquelle ledit organe est rétracté dans ladite gorge.

L'invention concerne également des procédés de montage ou de démontage d'un tel ensemble.

## Description

L'invention concerne un ensemble comprenant un roulement et un logement dans lequel le roulement est immobilisé, ainsi que des procédés de montage ou de démontage d'un tel ensemble.

Elle s'applique typiquement à un ensemble comprenant un roulement de roue de véhicule automobile qui est immobilisé dans un logement prévu dans un moyeu ou sur un arbre.

Pour s'opposer au déplacement d'un roulement dans un logement, et empêcher qu'il puisse en sortir de façon accidentelle, il est connu de réaliser un emmanchement serré d'une bague du roulement dans le logement. Ce type de montage ne donne pas entièrement satisfaction lorsque les efforts subis sont importants, comme c'est le cas avec des roulements de roue de véhicule automobile. Et, si l'on veut améliorer la fiabilité d'un tel montage, il est nécessaire d'utiliser des ajustements extrêmement serrés entre la bague et le logement, ce qui complique grandement le démontage d'un tel ensemble.

Pour tenter de résoudre ce problème de fiabilité, il est connu du document US-5 927 867, d'utiliser une douille pourvue de saillies, ladite douille étant emmanchée sur la bague extérieure du roulement avec les saillies disposées à l'intérieur d'une rainure prévue dans le logement.

Toutefois, ce type de solution ne donne pas satisfaction en ce qu'elle ne permet pas d'assurer une retenue axiale du roulement à l'intérieur du logement qui soit suffisamment importante. En effet, la retenue est assurée seulement par une portée d'encastrement sur laquelle les efforts subis par le roulement s'appliquent.

On connaît également du document DE-198 45 671 l'utilisation d'un dispositif de retenue axiale qui est monté fixement dans une gorge prévue sur un axe d'emmanchement.

Toutefois, cette solution implique un montage de l'ensemble particulièrement difficile en ce qu'elle nécessite d'emmancher d'abord le roulement, puis de disposer le dispositif de retenue axial qui comprend deux organes. En outre, compte tenu de la compacité de certains ensembles, notamment d'un roulement de roue disposé dans un moyeu, ce type de montage est tout simplement impossible à réaliser. Enfin, le montage proposé dans ce document nécessite un usinage particulier de la bague du roulement, ce qui implique un surcoût et va à l'encontre de la standardisation souhaitée notamment dans le domaine de l'industrie automobile.

Par ailleurs, les montages connus notamment des documents US-5 059 844 et DE-25 19 023 ne permettent pas un démontage aisé du roulement en cas de nécessité. En particulier, les montages connus sont quasiment irréversibles en ce qu'ils impliquent une détérioration importante des pièces en cas de démontage.

Pour résoudre l'ensemble de ces inconvénients, l'invention propose d'utiliser un organe de retenue axiale qui est déplaçable reversiblement entre une positon active assurant une retenue fiable et une position inactive permettant un montage et un démontage aisé de l'ensemble.

A cet effet, et selon un premier aspect, l'invention propose un ensemble comprenant un roulement et un logement dans lequel le roulement est immobilisé par emmanchement d'une bague du roulement et au moyen d'un organe de retenue axiale suivant une direction, le logement comprenant une gorge dans laquelle l'organe de retenue axiale est disposé de façon déplaçable réversiblement entre une position active dans laquelle au moins une partie dudit organe est saillant par rapport à la surface d'emmanchement du logement de sorte à venir en butée sur une face latérale de la bague emmanchée, et une position inactive dans laquelle ledit organe est rétracté dans ladite gorge, l'organe de retenue axiale présentant une rampe latérale de déplacement qui est agencée pour transformer un appui axial sur elle en déplacement de l'organe à l'intérieur de la gorge, et une surface latérale de butée opposée à ladite rampe. La bague extérieure est immobilisée dans le logement, et l'ensemble comprend en outre un arbre sur lequel au moins une bague intérieure du roulement est associé, ledit arbre comprenant au moins un orifice axial qui est agencé pour permettre l'introduction d'un outil apte à exercer un appui axial sur la rampe de l'organe de retenue axiale.

Selon un deuxième aspect, l'invention propose un procédé de montage d'un tel ensemble, ledit procédé prévoyant les étapes de :
- disposer, en position active, l'organe de retenue axiale dans la gorge ;
- disposer le roulement dans l'ouverture du logement en exerçant, par l'intermédiaire d'une surface de la bague à emmancher, un appui axial sur la rampe de l'organe de retenue axiale, de sorte à faire passer ledit organe en position inactive ;
- emmancher le roulement dans le logement en maintenant l'organe de retenue axiale en position inactive par appui entre celui-ci et la face supérieure de la bague à emmancher ;
- en fin d'emmanchement, la face supérieure de la bague emmanchée étant agencée pour ne plus exercer d'appui sur l'organe de retenue axiale, disposer ledit organe en position active, la surface latérale de butée venant en appui sur une face latérale de la bague emmanchée de sorte à assurer la retenue axiale du roulement dans le logement.

Selon une réalisation, l'organe de retenue axiale comprend une amorce de rupture de sorte, par rupture, à pouvoir passer d'une position active à une position inactive.

Selon un troisième aspect, l'invention propose un procédé de démontage d'un tel ensemble, ledit procédé prévoyant d'appliquer au roulement un effort axial suffisant pour rompre l'organe de retenue axiale, ledit roulement étant ensuite désemmanché de l'intérieur du logement.

Selon un quatrième aspect, l'invention propose un procédé de démontage d'un ensemble selon l'invention, ledit procédé prévoyant d'introduire un outil dans les orifices axiaux de l'arbre pour exercer un appui axial sur la rampe de l'organe de retenue axiale, de sorte à disposer ledit organe en position inactive, ledit roulement étant ensuite désemmanché de l'intérieur du logement.

D'autres objets et avantages de l'invention apparaîtront au cours de la description qui suit, faite en référence aux dessins annexés, dans lesquels :
- la figure 1 représente en coupe longitudinale suivant la ligne 1-1 de la figure 2, un mode de réalisation d'un ensemble comprenant un roulement et un logement à l'intérieur duquel le roulement est immobilisé par emmanchement de la bague extérieure du roulement et au moyen d'un organe de retenue axiale suivant une direction ;
- la figure 2 représente en vue de face l'ensemble de la figure 1 ;
- la figure 2a représente un agrandissement d'une coupe longitudinale suivant la ligne A-A de la figure 2, montrant l'organe de retenue en butée sur une face latérale de la bague extérieure ;
- la figure 2b représente en coupe longitudinale partielle un agrandissement de l'organe de retenue axiale de la figure 1, selon un mode de réalisation ;
- les figures 3a et 3b représentent en coupe longitudinale partielle deux modes de réalisation d'un organe de retenue axiale pourvu d'une rampe latérale de déplacement et d'une surface latérale de butée opposée à ladite rampe ;
- la figure 4 représente en coupe longitudinale partielle une bague extérieure présentant une rampe complémentaire ;
- les figures 5a et 5b représentent en coupe longitudinale partielle l'organe de la figure 3b disposé dans une gorge pourvue d'un anneau en matériau élastique, respectivement dans une position active et dans une position inactive ;
- les figures 6a et 6b représentent un vue schématique partielle et de face d'un organe de retenue axiale dont la surface supérieure est pourvue de lames ressort, respectivement selon un mode de réalisation ;
- les figures 7a et 7b représentent un organe de retenue axiale suivant un mode de réalisation, respectivement en vue de face et en coupe longitudinale suivant B-B ; la figure 7c représentant un agrandissement du détail C de la figure 7b ;
- les figures 8a à 8c et 9a à 9c sont respectivement des figures analogues aux figures 7a à 7c montrant respectivement deux autres modes de réalisation de l'organe de retenue axiale ;
- les figures 10a à 10c sont des vues en coupe longitudinale partielle de l'ensemble de la figure 1 montrant trois étapes de son montage ;
- les figures 11a et 11b sont des vues analogues aux figures 10 montrant deux étapes de démontage de l'ensemble de le figure 1.

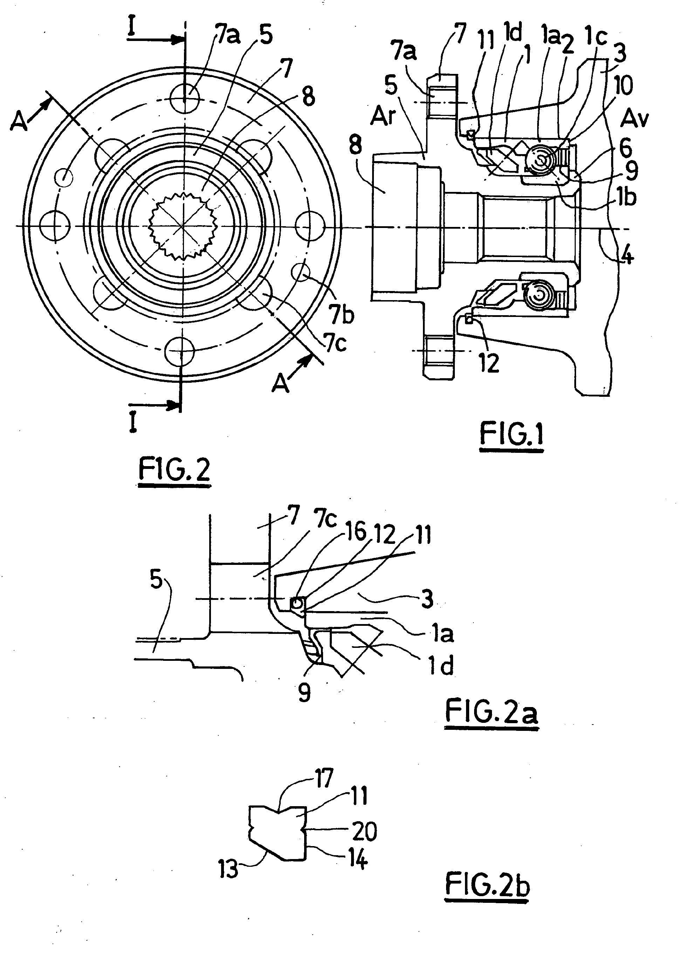

En relation avec les figures 1 et 2, on décrit un ensemble comprenant un roulement 1 de roue de véhicule automobile qui est immobilisé dans un logement 2 prévu dans un moyeu 3. Le roulement 1 comprend une bague extérieure 1 a, une bague intérieure 1b et des corps roulants 1 c disposés entre elles afin de permettre la rotation relative de ces deux bagues 1a, 1 b autour d'un axe 4.

Dans la description, les termes « arrière » et « avant » sont définis par rapport aux indices Ar et Av représentés sur la figure 1, les termes « axial » ou « transversal » sont définis par rapport à un plan parallèle à l'axe 4 et les termes « radial » ou « latéral » sont définis par rapport à un plan perpendiculaire à l'axe 4.

Dans le mode de réalisation représenté, la bague extérieure 1 a est fixe et la bague intérieure 1b est tournante mais, en fonction des besoins, le cas inverse peut également être envisagé.

Les bagues intérieure 1b et extérieure 1 a sont formées respectivement d'un anneau annulaire dans lequel un alésage est formé, l'alésage de la bague intérieure 1 b étant agencé pour permettre la disposition d'un arbre 5 à l'intérieur de celui-ci, et celui de la bague extérieure 1a pour loger la bague intérieure 1b et les corps roulants 1c. Pour ce faire, le roulement 1 est disposé, par exemple par emmanchement de l'arbre 5 dans l'alésage de la bague intérieure 1b, sur la surface extérieure de l'arbre 5.

Dans le cadre de sa fonction, le roulement 1 doit être retenu fermement en rotation et en translation par rapport à l'arbre 5. A cet effet, et compte tenu des efforts appliqués dans le cadre de son application, on peut prévoir de réaliser une collerette radiale 6 sur une partie extrême de l'arbre 5, ladite collerette venant en appui sur au moins une partie de la face latérale de la bague intérieure 1b.

Par ailleurs, des chemins de roulement sont réalisés, en regard, sur les faces respectivement extérieure et intérieure des bagues intérieure 1b et extérieure 1 a.

Dans le mode de réalisation représenté, le roulement est assuré par deux rangées de billes 1 c maintenues à équidistance par une cage 1 d et un chemin de roulement est prévu respectivement sur la bague intérieure 1b et directement sur la surface externe de l'arbre 5.

Ce type de roulement est particulièrement adapté pour la mise en rotation d'une roue d'un véhicule automobile. A cet effet, l'arbre 5 comprend un flasque 7 sur lequel est prévu des orifices 7a destinés à permettre l'association de la roue et des orifices 7b destinés à permettre l'association du disque de frein. Par ailleurs, l'arbre 5 comprend un alésage 8 destiné à recevoir un axe moteur. En variante, d'autres réalisations de roulement connues peuvent être utilisées en fonction des besoins de l'application envisagée.

En outre, le roulement 1 utilisé peut, de façon connue, être pourvu de moyens d'étanchéité 9 et/ou d'un dispositif capteur d'informations telles que la vitesse de rotation, le sens de déplacement et/ou la position angulaire de la bague tournante 1 b par rapport à la bague fixe 1 a.

Le roulement 1 est destiné à permettre la mise en rotation de l'arbre 5 par rapport à une structure fixe. Dans le mode de réalisation représenté, la structure fixe est un moyeu 3 destiné à être associé au châssis du véhicule automobile. Le moyeu 3 comprend un logement 2 dans lequel la bague extérieure 1 a est emmanchée de sorte à assurer une immobilisation radiale et axiale du roulement 1 à l'intérieur de celui-ci. Compte tenu des efforts importants qui sont appliqués sur le roulement 1, on prévoit également des moyens de retenue axiale suivant au moins une direction.

Dans le mode de réalisation représenté, l'ensemble comprend un moyen de retenue axiale dans une direction qui est formé d'un épaulement 10 prévu dans le logement 2 de sorte que la face latérale avant de la bague extérieure 1 a vienne en butée sur elle, et un organe de retenue axial 11 dans l'autre direction qui est décrit dans la suite de la description. En variante, on peut prévoir une autre réalisation du moyen de retenue axiale, par exemple sous la forme d'un anneau d'arrêt connu ou d'un autre organe de retenue axiale 11 suivant l'invention.

Par ailleurs, de façon analogue à ce qui est décrit ci-dessous en relation avec les figures, on peut prévoir un organe de retenue axiale 11 selon l'invention pour immobiliser la bague intérieure 1 b sur un arbre, le logement 2 étant alors formé sur l'arbre entre deux moyens de retenue axiale. Dans cette réalisation, la bague extérieure 1 a peut être disposée dans un logement ou être associée directement à une structure fixe.

Le logement 2 comprend une gorge 12 dans laquelle l'organe de retenue axiale 11 est disposé de façon déplaçable réversiblement entre une position active dans laquelle au moins une partie dudit organe est saillant par rapport à la surface d'emmanchement du logement 2 de sorte à venir en butée sur la face latérale arrière de la bague extérieure 1 a, et une position inactive dans laquelle ledit organe est rétracté dans ladite gorge. Dans le mode de réalisation représenté, la gorge 12 est usinée en retrait de la face arrière du logement 2 de sorte, lors du montage, à permettre un centrage du roulement 1 dans le logement 2.

L'organe de retenue axiale 11 présente une rampe latérale arrière de déplacement 13 dont la géométrie est agencée pour transformer un appui axial arrière-avant sur elle en déplacement de l'organe 11 à l'intérieur de la gorge 12. En outre l'organe 11 présente une surface latérale avant de butée 14 qui est opposée à la rampe 13 et qui est agencée pour venir en appui contre la face latérale arrière de la bague extérieure 1a de sorte à immobiliser le roulement 1 dans la direction avant-arrière.

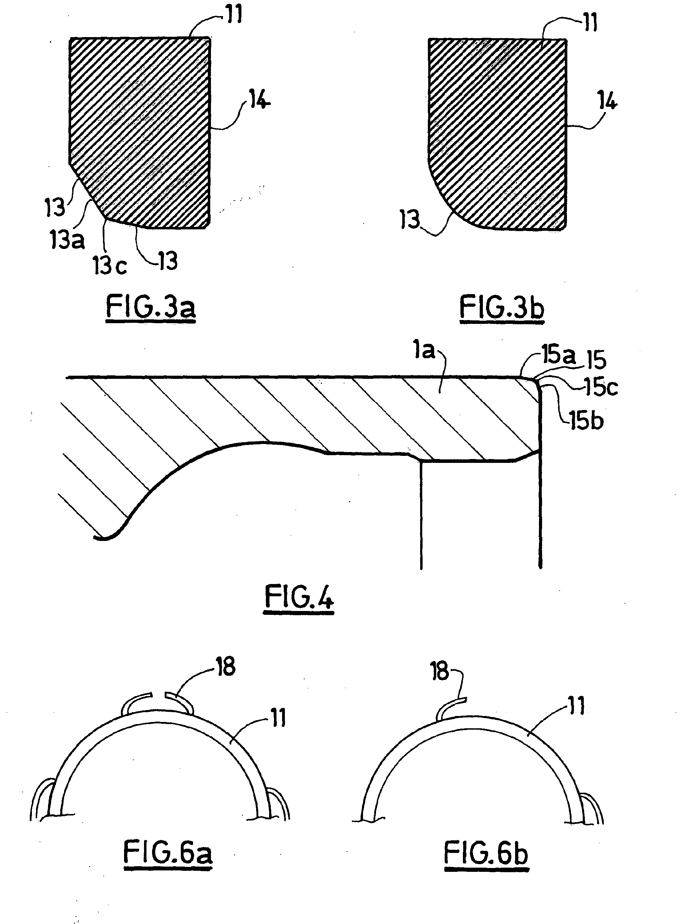

La figure 3a représente une rampe 13 présentant deux parties planes inclinées 13a, 13b reliée par une arrête arrondie 13c, et la figure 3b représente une rampe 13 présentant un profil arrondi.

Pour permettre d'exercer un appui axial arrière-avant sur la rampe 13, on peut prévoir que la bague extérieure 1a présente une rampe complémentaire 15. La figure 4 représente une telle rampe complémentaire 15 présentant deux parties planes inclinées 15a, 15b reliées par une arrête arrondie 15c, de sorte à coopérer avec la rampe 13 de l'organe 11 pour améliorer la transmission de l'effort axial. En outre, on peut prévoir de traiter au moins la surface d'une des rampes 13, 15, notamment celle de l'organe 11, avec une substance ou physiquement, de sorte à diminuer leur coefficient de frottement. Par ailleurs, on peut également prévoir de traiter l'organe 11 de façon analogue de sorte à facilité son déplacement à l'intérieur de la gorge 12.

En relation avec les figures 1, 2, 5 et 6, on décrit un ensemble comprenant des moyens de contrainte élastique du déplacement de l'organe 11 dans la gorge 12, lesdits moyens étant agencés pour maintenir l'organe 11 dans sa position active en l'absence de contrainte d'inactivation.

Sur les figures 1, 2 et 5, les moyens de contrainte élastique comprennent un anneau 16 en matériau élastique, par exemple sous la forme d'un joint torique en matériau polymère. Dans le cas d'une application pour roue de véhicule automobile, le matériau polymère est choisi de sorte à résister aux contraintes de température existantes en gardant une certaine élasticité.

L'anneau 16 est disposé entre le fond de la gorge 12 et l'organe 11, et est agencé pour, à l'état comprimé, permettre de disposer l'organe 11 dans sa position inactive (figure 5b) et, à l'état stable, permettre de disposer l'organe 11 dans sa position active (figure 5a). En effet, lors du déplacement de l'organe 11 dans la gorge 12, la surface supérieure de l'organe 11 vient écraser l'anneau 16 et, lors du relâchement de l'appui exercé sur l'anneau 16, celui-ci reprend sa position stable en disposant l'organe 11 dans sa position active. Ainsi, l'organe 11 peut être déplacé réversiblement dans la gorge 12 avec un débattement e qui dépend du matériau et de la géométrie de l'anneau 16, ledit débattement pouvant être ainsi modulé en fonction des besoins. En particulier, on peut prévoir d'augmenter le débattement e de sorte à améliorer la fiabilité de la retenue conférée par l'organe 11.

En variante représentée notamment sur les figures 2b et 5, la surface supérieure de l'organe 11 comprend une gorge 17 de réception de l'anneau 16 qui permet de centrer ledit anneau par rapport à l'organe 11 et donc ledit organe par rapport à l'alésage du logement 2.

Sur les figures 6, les moyens de contrainte élastique sont formés sur la surface supérieure de l'organe 11 sous la forme de lame ressort 18. Pour ce faire, des découpes sont réalisées sur le diamètre extérieur de l'organe 11 selon le profil d'une développante de cercle, par exemple d'un demi anneau. Selon la figure 6a, quatre groupes de deux demi anneaux disposés en regard l'un de l'autre sont répartis angulairement sur la surface supérieure de l'organe 11, alors que selon la figure 6b quatre demi anneaux sont répartis angulairement sur la surface supérieure de l'organe 11. En particulier, ces groupes sont répartis selon des divisions angulaires égales afin, par appui sur le fond de la gorge 12, de permettre le centrage de l'organe 11 dans celle-ci et donc de centrer ledit organe par rapport à l'alésage du logement 2. En outre, leur géométrie et leur nombre sont agencés pour, par déformation, présenter une élasticité suffisante au déplacement réversible de l'organe 11 dans la gorge 12.

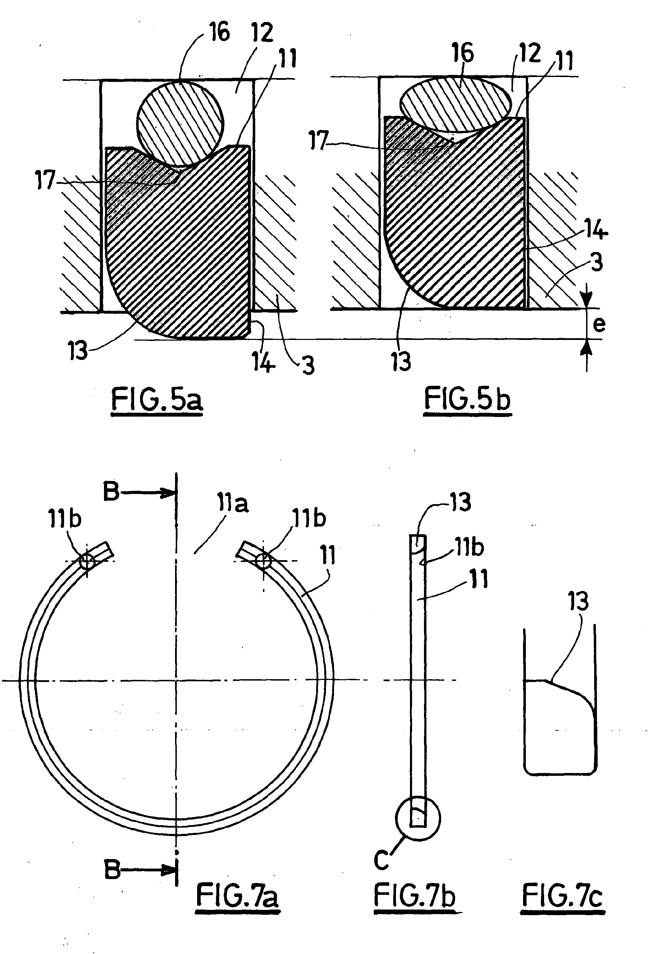

En relation avec les figures 7 à 9, on décrit ci-dessous trois modes de réalisation d'un organe de retenue axiale 11 formé d'une pièce annulaire tronquée radialement, ladite pièce étant réalisée en matériau métallique.

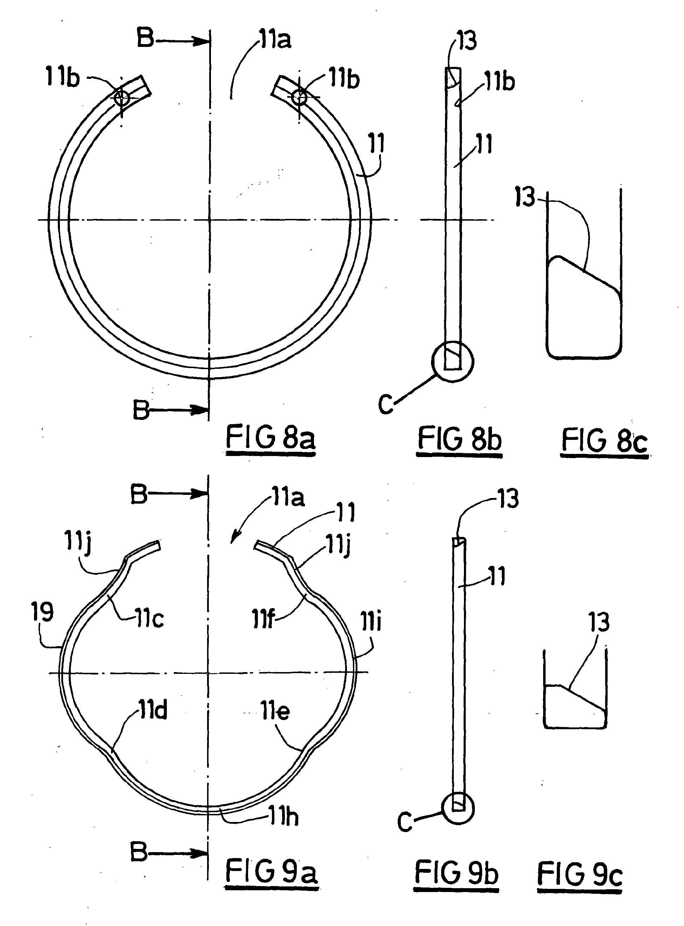

Sur les figures 7 et 8, la pièce annulaire 11 est de forme torique avec une ouverture radiale 11 a délimitée par deux extrémités. Ainsi, par déplacement d'ouverture/fermeture correspondant au rapprochement des deux extrémités, la pièce 11 peut présenter un diamètre variable entre une position stable et une position dans laquelle, sous effort, les deux extrémités sont rapprochées. En particulier, la pièce 11 peut présenter deux diamètres, un premier correspondant à la position stable et donc active (représentée sur les figures) et un deuxième, sensiblement égal au diamètre de la surface d'emmanchement du logement 2, dans lequel la pièce 11 est disposée dans sa position inactive.

Sur les figures 7b-c, la rampe 13 présente un profil courbe avec trois rayons de courbure différents et, sur les figures 8b-c, la rampe 13 présente un profil plan arrondi à ses deux extrémités.

Par ailleurs, la pièce annulaire 11 des figures 7 et 8 comprend un moyen de préhension de la pièce qui est prévue au voisinage de chacune de ses extrémités tronquées. Ces moyens, sous la forme de trous 11 b , permettent par disposition d'un outil à l'intérieur de chacun d'eux de diminuer le diamètre de la pièce 11, en particulier afin de faciliter la disposition de la pièce 11 à l'intérieur de la gorge 12.

Sur les figures 9, la pièce annulaire 11 présente une succession de tronçons qui sont décalés radialement les uns par rapport aux autres. Ainsi, du fait de l'élasticité du matériau formant la pièce 11, ces tronçons forment moyens de contrainte élastique. En particulier, le matériau formant la pièce 11 et/ou les traitements notamment thermiques subis par la pièce 11 permettent d'ajuster son élasticité en fonction des besoins de l'application considérée.

Dans le mode de réalisation des figures 9, la pièce comprend quatre tronçons 11 c-f décalés radialement vers l'intérieur qui sont reliés par trois tronçons 11 g-i décalés radialement vers l'extérieur. Ainsi, lorsque la pièce 11 est disposée dans la gorge 12 en position active, seuls les tronçons intérieurs 11 c-f sont saillant par rapport à la surface d'emmanchement du logement 2 et viennent donc en butée sur la face latérale arrière de la bague extérieure 1a, les tronçons extérieurs 11 g-i étant en appui contre le fond de la gorge 12 de sorte à centrer la pièce 11 dans la gorge 12. Et, lorsqu'un appui axial est exercé sur la rampe 13, les tronçons intérieurs 11 c-f se rétractent dans la gorge 12 afin de disposer la pièce 11 en position inactive. Cette rétraction met sous tension élastique la pièce 11, de sorte, lorsque l'appui est relâché, à provoquer le retour de la pièce 11 en position active.

Sur les figures 9b-c, la rampe 13 présente un profil à deux parties planes inclinées qui sont reliées par une arrête arrondie.

Par ailleurs, la pièce annulaire 11 des figures 9 comprend un moyen de préhension de la pièce qui est prévue au voisinage de chacune de ses extrémités tronquées. Ces moyens, sous la forme d'épaulement 11j , permettent par disposition d'un outil contre eux de diminuer le diamètre de la pièce 11, en particulier afin de faciliter la disposition de la pièce 11 à l'intérieur de la gorge 12.

On décrit ci dessous un procédé de montage de l'ensemble représenté sur la figure 1 qui illustre le fait que, outre la grande fiabilité de la retenue axiale obtenue suivant l'invention et ce sans usinage de l'une quelconque des bagues 1 a, 1 b du roulement 1, l'organe 11 utilisé permet un montage aisé de l'ensemble.

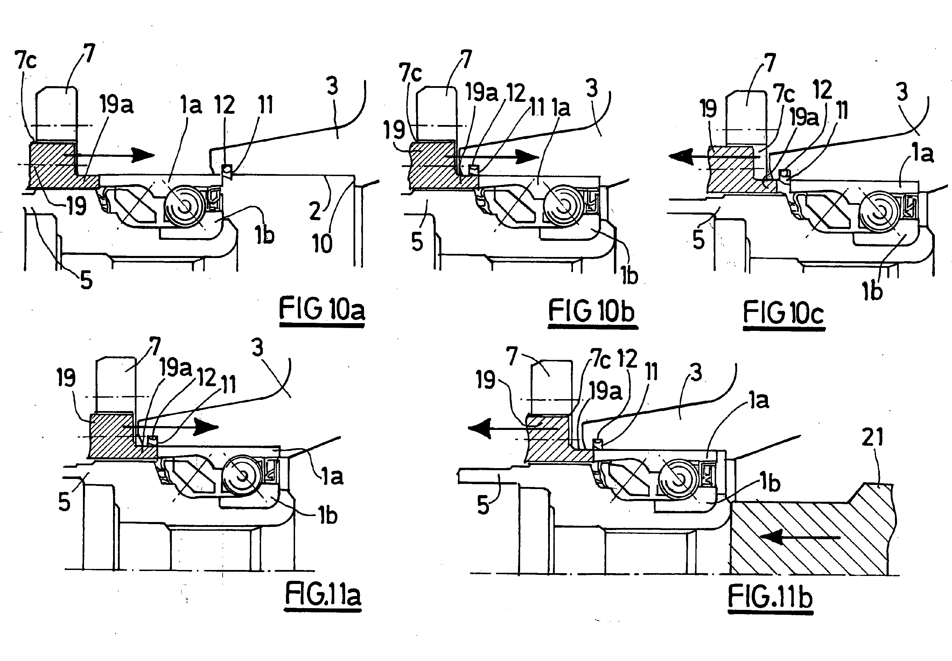

Dans une première étape du procédé de montage, l'organe 11 est disposé dans la gorge 12 en position active puis le roulement 1 est disposé dans l'ouverture du logement 2 de sorte à le centrer dans ledit logement. En exerçant un effort axial arrière-avant sur le roulement 1 à l'aide d'un outil 19 (figure 10a) disposé contre la face arrière dudit roulement, on fait ainsi passer l'organe 11 en position inactive en exerçant, par l'intermédiaire de la rampe complémentaire 15, un appui axial sur la rampe 13.

Ensuite, l'effort axial est maintenu de sorte à emmancher le roulement 1 dans le logement 2 en maintenant l'organe 11 en position inactive par appui entre celui-ci et la face supérieure de la bague extérieure 1a.

En fin d'emmanchement, la face latérale avant de la bague extérieure 1 a vient en butée sur l'épaulement 10 et la face supérieure de la bague extérieure 1 a n'exerce plus d'appui sur l'organe 11 (figure 10b). Ainsi, après retrait de l'outil 19 (figure 10c), l'organe 11 se déplace en position active avec la surface latérale de butée 14 en appui sur la face latérale arrière de la bague extérieure 1 a. On obtient ainsi un ensemble monté tel que représenté sur la figure 1.

On décrit ci-dessous deux procédés de démontage de l'ensemble ainsi monté, qui illustre, en cas de besoin, la possibilité de réaliser ce démontage de façon particulièrement simple.

Selon une première réalisation, l'organe de retenue axiale 11 comprend une amorce de rupture 20 (figure 2b) qui est agencée pour permettre la rupture de l'organe 11 sous l'effet d'un effort supérieur aux efforts que l'ensemble a à subir lors de son utilisation. Dans le mode de réalisation représenté, l'amorce de rupture 20 est axiale et permet, par cisaillement, de désolidariser les parties de l'organe 11 qui sont saillantes de la gorge 12.

Ainsi, en appliquant un effort de rupture sur le roulement 1, par exemple dans le sens avant-arrière, la surface latérale arrière de la bague extérieure 1 a transmet un effort de cisaillement à l'organe 11 de sorte que, par rupture, il passe de sa position active à sa positon inactive. Ensuite, on peut désemmancher librement ledit roulement de l'intérieur du logement 2 en poursuivant l'effort dans le sens avant-arrière.

Selon un deuxième mode de réalisation, le flasque 7 comprend quatre orifices axiaux 7c (voir figure 2) qui sont agencés pour permettre l'introduction d'un outil 19 apte à exercer un appui axial sur la rampe 13 de l'organe de retenue axiale 11. En particulier, l'outil 19 peut comprendre quatre doigts 19a répartis angulairement de sorte, par enfoncement desdits doigts dans les orifices 7c, à exercer un appui axial suffisant pour déplacer l'organe 11 en positon inactive. Dans le mode de réalisation représenté, l'outil 19 pourvu de doigts 19a est le même que celui utilisé pour monter l'ensemble (figures 10).

Ainsi, en introduisant les doigts 19a dans les orifices 7c et en appliquant un effort arrière-avant, on peut disposer l'organe 11 en position inactive (figure 11a). Ensuite, à l'aide d'un deuxième outil 21, on peut désemmancher librement le roulement 1 de l'intérieur du logement 2 en appliquant un effort dans le sens avant-arrière (figure 11b) sur la face avant du roulement 1, et ce en ne détériorant aucune pièce de l'ensemble. Ainsi, le montage/démontage de l'ensemble peut être réalisé plusieurs fois en utilisant les mêmes pièces.

## Revendications

1. Ensemble comprenant un roulement (1) et un logement (2) dans lequel le roulement (1) est immobilisé par emmanchement d'une bague (1a, 1b) du roulement (1) et au moyen d'un organe de retenue axiale (11) suivant une direction, le logement (2) comprenant une gorge (12) dans laquelle l'organe de retenue axiale (11) est disposé de façon déplaçable réversiblement entre une position active dans laquelle au moins une partie dudit organe est saillant par rapport à la surface d'emmanchement du logement (2) de sorte à venir en butée sur une face latérale de la bague emmanchée (1a, 1b), et une position inactive dans laquelle ledit organe est rétracté dans ladite gorge, l'organe de retenue axiale (11) présentant une rampe latérale de déplacement (13) qui est agencée pour transformer un appui axial sur elle en déplacement de l'organe (11) à l'intérieur de la gorge (12), et une surface latérale de butée (14) opposée à ladite rampe, ledit ensemble étant **caractérisé en ce que** la bague extérieure (1a) est immobilisée dans le logement (2), et **en ce qu'**il comprend en outre un arbre (5) sur lequel au moins une bague intérieure (1 b) du roulement (1) est associé, ledit arbre comprenant au moins un orifice axial (7c) qui est agencé pour permettre l'introduction d'un outil (19) apte à exercer un appui axial sur la rampe (13) de l'organe de retenue axiale (11).

2. Ensemble selon la revendication 1, **caractérisé en ce que** l'organe de retenue axiale (11) est formé d'une pièce annulaire tronquée radialement, ladite pièce étant agencée pour, par déplacement d'ouverture/fermeture, pouvoir présenter deux diamètres, un premier diamètre correspondant à sa position active et un deuxième diamètre correspondant à sa position inactive.

3. Ensemble selon la revendication 2, **caractérisé en ce qu'**il comprend en outre des moyens de contrainte élastique du déplacement de la pièce (11) dans la gorge (12), lesdits moyens étant agencés pour maintenir la pièce (11) dans sa position active en l'absence de contrainte d'inactivation.

4. Ensemble selon la revendication 3, **caractérisé en ce que** les moyens de contrainte élastique comprennent un anneau en matériau élastique (16) qui est interposé entre le fond de la gorge (12) et la pièce (11), ledit anneau étant agencé pour, à l'état comprimé, permettre de disposer la pièce (11) dans sa position inactive et, à l'état stable, permettre de disposer la pièce (11) dans sa positon active.

5. Ensemble selon la revendication 4, **caractérisé en ce que** la surface supérieure de la pièce comprend une gorge (17) de réception de l'anneau (16).

6. Ensemble selon la revendication 3, **caractérisé en ce que** les moyens de contrainte élastique sont formés sur la surface supérieure de la pièce (11).

7. Ensemble selon la revendication 6, **caractérisé en ce que** les moyens de contrainte élastique comprennent des lames ressort (18) réparties angulairement sur la surface supérieure de la pièce (11).

8. Ensemble selon la revendication 3, **caractérisé en ce que** la pièce (11) est réalisée en un matériau présentant une élasticité, les moyens de contrainte élastique comprenant une succession de tronçons de pièce (11) qui sont décalés radialement les uns par rapport aux autres.

9. Ensemble selon la revendication 8, **caractérisé en ce qu'**il comprend quatre tronçons (11c-f) décalés radialement vers l'intérieur, lesdits tronçons étant, en position active, saillants par rapport à la surface d'emmanchement du logement (2).

10. Ensemble selon l'une quelconque des revendications 2 à 9, **caractérisé en ce qu'**un moyen de préhension (11b, 11j) de la pièce (11) est prévue au voisinage de chacune de ses extrémités tronquées.

11. Ensemble selon l'une quelconque des revendications 1 à 10, **caractérisé en ce qu'**il comprend en outre un moyen de retenue axiale (10) du roulement (1) dans la direction opposée à la direction de retenue assuré par l'organe (11).

12. Ensemble selon l'une quelconque des revendications 1 à 11, **caractérisé en ce que** la rampe (13) présente au moins une partie plane.

13. Ensemble selon l'une quelconque des revendications 1 à 11, **caractérisé en ce que** la rampe (13) présente un profil arrondi.

14. Ensemble selon l'une quelconque des revendications 1 à 13, **caractérisé en ce que** la bague (1a, 1b) présente une rampe complémentaire (15) dont la géométrie est agencée pour coopérer avec la rampe (13) de l'organe de retenue axiale (11).

15. Ensemble selon l'une quelconque des revendications 1 à 14, **caractérisé en ce que** la ou les rampes (13, 15) sont traitées de sorte à diminuer leur coefficient de frottement.

16. Ensemble selon l'une quelconque des revendications 1 à 15, **caractérisé en ce que** l'organe de retenue axiale (11) comprend une amorce de rupture (20) de sorte, par rupture, à pouvoir passer d'une position active à une position inactive.

17. Procédé de montage d'un ensemble selon la revendication 1, ledit procédé prévoyant les étapes de :
- disposer, en position active, l'organe de retenue axiale (11) dans la gorge (12) ;
- disposer le roulement (1) dans l'ouverture du logement (2) en exerçant, par l'intermédiaire d'une surface de la bague à emmancher (1a, 1b), un appui axial sur la rampe (13) de l'organe de retenue axiale (11), de sorte à faire passer ledit organe en position inactive ;
- emmancher le roulement (1) dans le logement (2) en maintenant l'organe de retenue axiale en position inactive par appui entre celui-ci et une face de la bague à emmancher (1 a, 1 b) ;
- en fin d'emmanchement, la face de la bague emmanchée (1a, 1b) étant agencée pour ne plus exercer d'appui sur l'organe de retenue axiale (11), disposer ledit organe en position active, la surface latérale de butée (14) venant en appui sur une face latérale de la bague emmanchée (1a, 1b) de sorte à assurer la retenue axiale du roulement (1) dans le logement (2).

18. Procédé de démontage d'un ensemble selon la revendication 16, ledit procédé prévoyant d'appliquer au roulement (1) un effort axial suffisant pour rompre l'organe de retenue axiale (11), ledit roulement étant ensuite désemmanché de l'intérieur du logement (2).

19. Procédé de démontage d'un ensemble selon la revendication 1, ledit procédé prévoyant d'introduire un outil (19) dans les orifices axiaux (7c) de l'arbre (5) pour exercer un appui axial sur la rampe (13) de l'organe de retenue axiale (11), de sorte à disposer ledit organe en position inactive, ledit roulement étant ensuite désemmanché de l'intérieur du logement (2).
